# EUROPEAN PATENT APPLICATION

(11) **EP 4 751 902 A1**
(43) Date of publication of application: **03.06.2026**
(21) Application number: 25217980.9
(22) Date of filing: 24.11.2025
(51) Int. Cl.: B31B 50/84, B31D 5/00, B65D 5/74, B31D 1/00, B31F 1/00, B32B 1/00, B32B 3/28, B32B 27/10, B32B 29/00, B29C 65/00, B31B 105/00, B31B 120/40

(54) **METHOD FOR MAKING A CONTAINER AND CONTAINER WHICH CAN BE MADE WITH THE METHOD**

(30) Priority: 28.11.2024 IT 202400026976
(71) Applicant: G. Mondini SpA, 25033 Cologne (BS) (IT)
(72) Inventor: MONDINI, Paolo Carlo, 25033 COLOGNE BS (IT); PADERNI, Daniel, 25045 CASTEGNATO BS (IT)
(74) Representative: Ponchiroli, Simone

(57) **Abstract**

A method for making a container which comprises an inner laminating step during which a plastic first sheet (14) is laminated at an inner side (8) of a supporting core (7) of cellulose material, an outer laminating step during which a plastic second sheet (15) is laminated at an outer side (9) of the supporting core (7) and a sealing step during which the first sheet (14) and the second sheet (15) are sealed to each other and the supporting core (7) is completely enclosed between the first sheet (14) and the second sheet (15) to obtain a first part of the container. Moreover, the first part (2) is then fixed to a second part (3) of the container, by fixing one of either the first sheet (14) or the second sheet (15) to a surface layer (19) of the second part (3) which is constituted of a plastic material.

## Description

This invention relates to a method for making a container and a container which can be made with the method. This invention is targeted in particular at containers intended to be used to make disposable packaging, such as that commonly used for products, food or not, sold in supermarkets.

As is known, for several years now there has been a spreading need to always use less plastic to make packaging, in particular disposable packaging, in favour above all of greater use of cellulose material-based products.

In the contexts in which this is possible, much of the packaging previously made of plastic has gradually been replaced by packaging made practically exclusively of cellulose material; for example, this applies to many disposable trays for packaging fruit and vegetables (now generally made of folded paperboard) and to containers for eggs (now generally made of moulded cellulose pulp).

Whilst containers made exclusively, or almost, of cellulose material are suitable for packaging solid and dry products, they cannot be used for packaging liquid or wet products.

The packaging used for products of this type is generally multi-material containers which comprise both plastic materials, and cellulose-based materials, generally with a clear prevalence of the latter in terms of quantity used.

The most widely used multi-material materials include bonded multi-layer materials, in which a layer of plastic material is positioned in such a way as to constitute the surface in contact with the packaged product, whilst one or more layers of cellulose material serve mainly to give the container mechanical strength. Moreover, the layer of plastic material serves as a heat-sealable material for making the container.

Containers of this type may include parallelepiped containers (often simply labelled Bricks) and so-called Gable Top containers which have the upper part folded in the shape of a gable roof. The most recent versions of both of those types of containers may also be provided with a dispensing spout closed by a re-closable cap, made of plastic material, and fixed at the upper part.

As can easily be inferred, providing an additional spout made of plastic material is a significant disadvantage when making this type of containers, since it goes against the requirement to continually reduce the quantity of plastic used.

It should also be highlighted that, at present, containers with reduced plastic content are widespread exclusively for marketing food products, whilst packaging continues to be made completely of plastic in many other sectors such as that of liquid detergents for personal care or for household cleaning, where the companies need to make their products stand out even in terms of the appearance of the package (companies do not consider the marketing of bubble bath, shampoo and the like in Brick or Gamble Top containers to be commercially satisfactory).

In this context the technical purpose which forms the basis of this invention is to define a method for making a container and a container which can be made with the method, which overcome the above-mentioned disadvantages.

In particular the technical purpose of this invention is to define a method for making a container which allows the making of containers which are mainly cellulose material-based with a much wider variety of shapes than is currently known on the market.

A further technical purpose of this invention is to define a method for making a container which allows a further reduction in the use of plastic materials compared with the prior art.

The technical purpose and the aims indicated are substantially achieved by a method for making a container and by a container which can be made with the method, in accordance with what is defined, respectively, in the independent claims 1 and 14. Particular embodiments of this invention are defined in the corresponding dependent claims.

Further characteristics and the advantages of this invention will be more apparent from the detailed description of several preferred, non-limiting embodiments of a method for making a container and of a container which can be made with the method, illustrated with reference to the accompanying drawings, in which:
- Figure 1 shows, in a central vertical cross-section view, a first embodiment of a supporting core usable in the context of this invention;
- Figure 2 shows, in a central vertical cross-section view, a second embodiment of a supporting core usable in the context of this invention;
- Figure 3 shows, in a central vertical cross-section view and with the parts in the background not illustrated, an inner laminating step in accordance with this invention, carried out using the supporting core of Figure 2;
- Figure 4 shows, in a central vertical cross-section view and with the parts in the background not illustrated, an outer laminating step in accordance with this invention, carried out after the inner laminating step of Figure 3;
- Figure 5 shows, in a central vertical cross-section view and with the parts in the background not illustrated, a sealing step in accordance with this invention, carried out after the outer laminating step of Figure 4;
- Figure 6 shows, in a central vertical cross-section view and with the parts in the background not illustrated, an inner cutting step in accordance with this invention, carried out after the sealing step of Figure 5;
- Figure 7 shows, in a central vertical cross-section view, a third embodiment of a supporting core usable in the context of this invention;
- Figure 8 shows, in a central vertical cross-section view and with the parts in the background not illustrated, an outer laminating step in accordance with this invention, carried out using the supporting core of Figure 7;
- Figure 9 shows, in a central vertical cross-section view and with the parts in the background not illustrated, an inner laminating step in accordance with this invention, carried out after the outer laminating step of Figure 8;
- Figure 10 shows, in a central vertical cross-section view and with the parts in the background not illustrated, a sealing step in accordance with this invention, carried out after the inner laminating step of Figure 9;
- Figure 11 shows, in a central vertical cross-section view and with the parts in the background not illustrated, an inner cutting step in accordance with this invention, carried out after the sealing step of Figure 10;
- Figure 12 shows, in a central vertical cross-section view and with the parts in the background not illustrated, a different inner cutting step in accordance with this invention, carried out after the sealing step of Figure 10;
- Figure 13 shows, in a central vertical cross-section view and with the parts in the background not illustrated, the result of a different execution of the inner laminating step, of the outer laminating step and of the sealing step in accordance with this invention, using the supporting core of Figure 7;
- Figure 14 shows, in a central vertical cross-section view and with the parts in the background not illustrated, an inner cutting step in accordance with this invention, carried out on the element of Figure 13;
- Figure 15 shows, in a central vertical cross-section view and with the parts in the background not illustrated, a joining step in accordance with this invention, carried out after the inner cutting step of Figure 11; and
- Figure 16 shows, in a partial view, a different way of carrying out a joining step in accordance with this invention.

It should be noticed that the accompanying figures are not to scale and that, in them, the thicknesses of some materials are deliberately shown to be greater than they are in reality with the sole purpose of making them visible. Moreover, for simplicity, all of the parts are shown with reference to embodiments which have cylindrical symmetry, but that shall not be considered in any way limiting for this invention.

Hereinafter first there is a description of the method according to this invention, and then of the container 1. Since the container 1 may be obtained by implementing at least one embodiment of the method, what will be described relative to the method shall also be understood to apply, if technically compatible, for the container 1 and vice versa.

The method according to this invention comprises a first main step during which a first part 2 of the container 1 is made, a second main step during which a second part 3 of the container 1 is picked up or made and a joining step during which the first part 2 and the second part 3 are joined to each other to delimit between them an inner space 4 of the container 1.

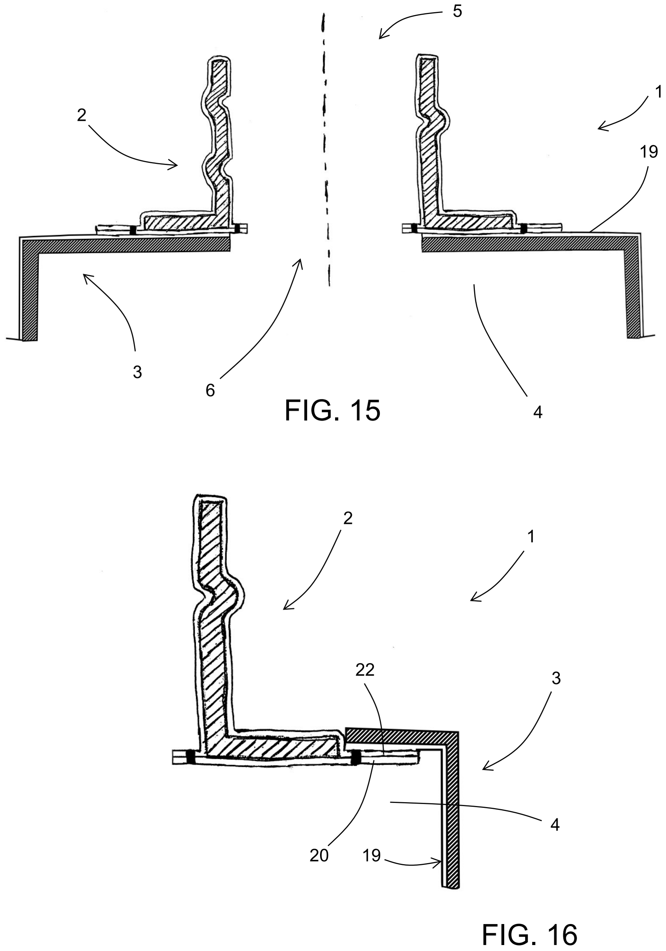

In some embodiments, the second part 3 is a hollow element which has an access opening 5, and the first part 2 is configured to constitute, in use, a mouth 6 of the container 1 (Figures 15 and 16). During the joining step the first part 2 is fixed to the second part 3 at the access opening 5.

In some embodiments, the container 1 to be obtained has the shape of a vial or bottle and the second part 3 defines the lateral wall of the container 1; it may have a tubular shape and may have both ends open, or one end open and one end closed, for example squashed and sealed on itself. The first part 2 advantageously closes one of the ends of the second part 3 and may constitute a dead end or a mouth 6 of the container 1.

In some embodiments, two or more separate first parts 2 may be fixed to a single second part 3, for example one for making the bottom of the container 1 and one for making the mouth 6. In this case, during the first main step a plurality of first parts 2 is made and, during the joining step, all of the first parts 2 are joined to the second part 3, each at a different zone of the second part 3, to delimit the inner space 4 of the container 1.

In some embodiments, the second part 3 is constituted of, or comprises, a paper-plastic bonded multi-layer material, and may be made by folding or wrapping and sealing that material on itself (thanks to the presence of one or more suitable heat-sealing layers), in a similar way to that known for making Brick or Gamble Top containers.

In some embodiments, the second part 3 may be made in one of the ways described below for making the first part 2.

In accordance with an innovative aspect of this invention, the first main step in turn comprises a sequence of steps carried out one after another, in particular a preliminary step, an inner laminating step, an outer laminating step and a sealing step.

During the preliminary step a supporting core 7, three-dimensionally formed, is picked up or made, which comprises at least one cellulose material and which has a first side 8, intended to be directed inwards into the container 1, and a second side 9, intended to be directed outwards from the container 1. In other words, the supporting core 7 is three-dimensionally formed as it has, in three directions perpendicular to each other, three respective extensions which are each greater than a thickness of the supporting core 7 (as clearly showed for example in the figures).

Moreover, advantageously, the three-dimensionally formed supporting core 7 which is picked up or made in the preliminary step has a shape and overall dimensions which are substantially those of the first part 2 to be made, except for the sheets of plastic material which are subsequently applied to the supporting core 7 as described below.

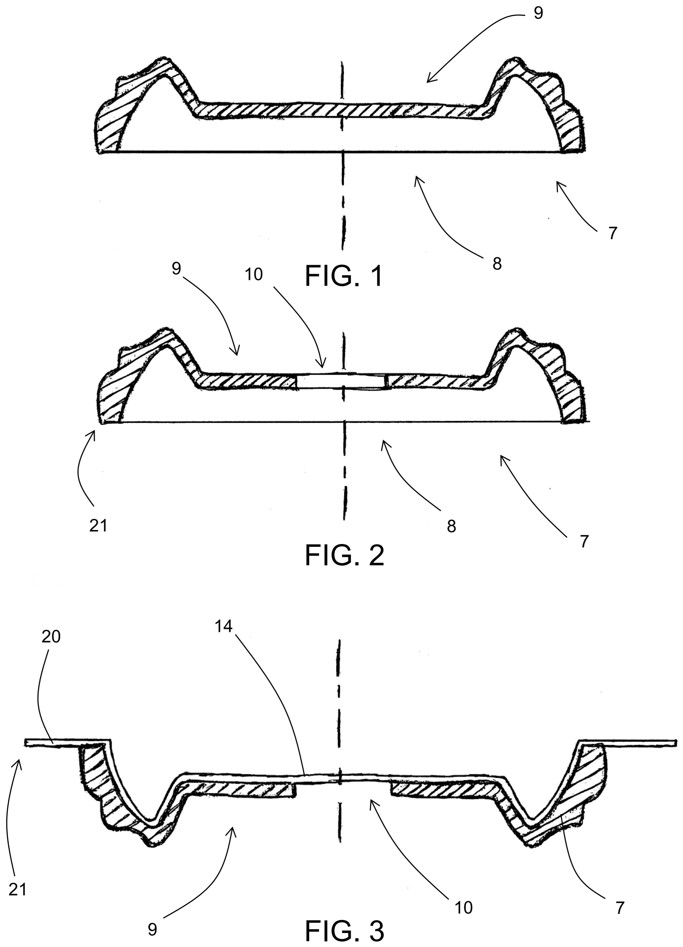

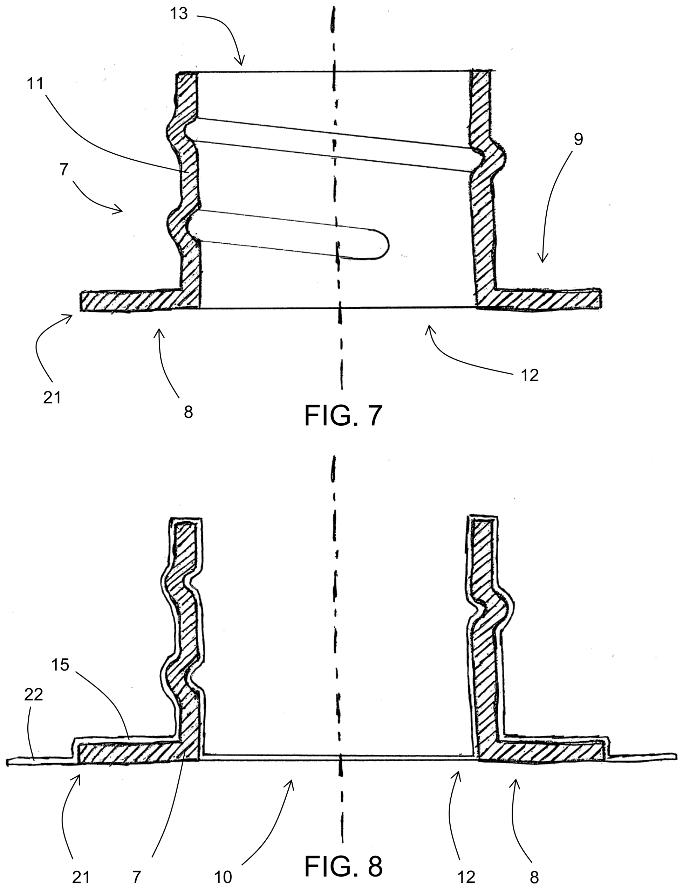

Advantageously, the supporting core 7 substantially retains its shape unchanged throughout the entire first main step until obtaining the first part 2. In some embodiments, during the first main step the supporting core 7 is made by moulding a cellulose pulp-based material. Alternatively a supporting core 7 previously made with that method may be picked up. The use of a supporting core 7 moulded with a cellulose pulp-based material is a particularly preferred technical solution, since it allows first parts 2 with complex shapes to be made, as shown by way of example in the accompanying figures in which the core of Figure 1 is usable for making a first part 2 configured to constitute a bottom of a container 1, that of Figure 2 is usable for making a first part 2 configured to constitute a base for subsequent mounting of a dispensing valve or nozzle, whilst that of Figure 7 is usable for making a first part 2 configured to constitute a threaded mouth 6 of the container 1, onto which in use a cap can be screwed.

In some embodiments, such as those of Figures 2 and 7, the supporting core 7 which is picked up or made during the preliminary step has at least one first through hole 10.

In some embodiments, such as that of Figure 7, moreover, the supporting core 7 comprises a tubular portion 11 which is configured to define a mouth 6 of the container 1 and which extends between an inner edge 12 and an outer edge 13. In some cases, the first through hole 10 is delimited by the inner edge 12 of the tubular portion, whilst in other cases the first through hole 10 is delimited by the outer edge 13 of the tubular portion. In some cases the tubular portion 11 may define a threaded mouth 6 onto which a cap may be screwed to close the container 1 (Figure 7).

During the inner laminating step a first sheet 14, which is constituted of a first plastic material is laminated, at the first side 8 of the supporting core 7, whilst during the outer laminating step a second sheet 15, which is constituted of a second plastic material is laminated, at the second side 9 of the supporting core 7. Advantageously, the first sheet 14 and the second sheet 15 are impermeable to water and water vapour and have properties of a barrier to gases.

In some embodiments the first sheet 14 and the second sheet 15 are two separate sheets; in other embodiments, in contrast, they may be part of a single sheet or of a bag which constitute both of the sheets.

The inner laminating step may be carried out either before, or after, the outer laminating step.

If the first sheet 14 and the second sheet 15 are part of a single sheet, between one laminating step and the next there may be a step of folding the single sheet around the supporting core 7. There may also be a folding step when the first sheet 14 and the second sheet 15 are part of a bag. When the first sheet 14 and the second sheet 15 are defined by a larger single sheet or by a bag, at least after the laminating steps the first sheet 14 and the second sheet 15 are connected to each other along one or more fold lines.

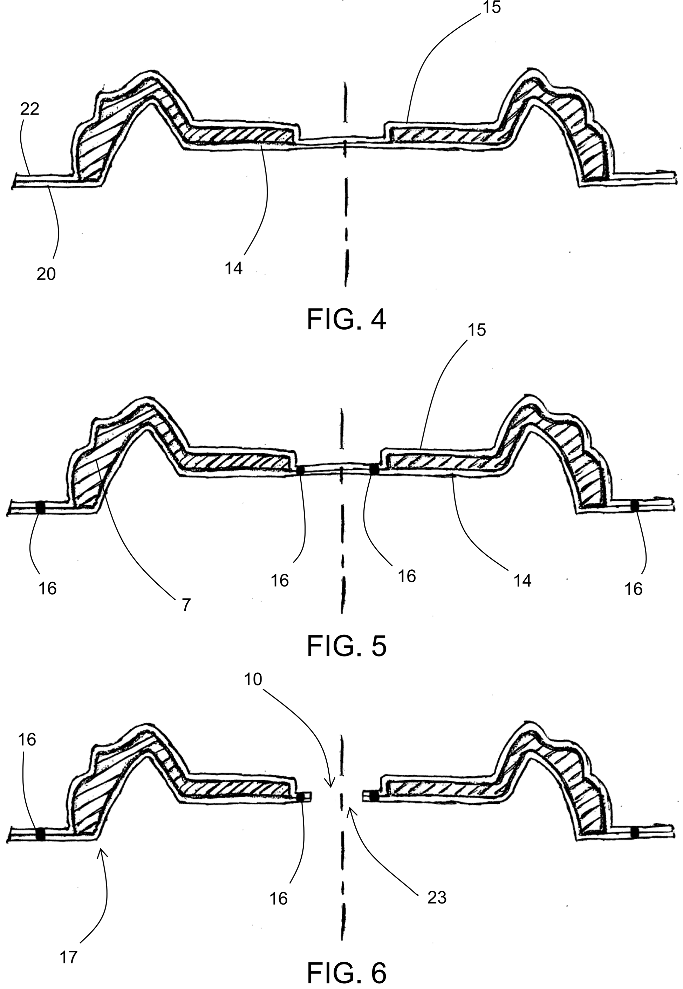

In the embodiment in Figures 3 and 4, first the inner laminating step is carried out and then the outer laminating step is carried out.

In a different way, in the embodiment illustrated in Figures 8 e 9, first the outer laminating step is carried out and then the inner laminating step is carried out. However, in both cases, the same result could be obtained by inverting the order in which the two laminating steps are carried out.

In the case in which the first sheet 14 and the second sheet 15 are constituted of a single bag, the outer laminating step and the inner laminating step may advantageously be carried out simultaneously by sucking air from inside the bag, through an opening of the bag itself.

Both the first plastic material and the second plastic material are thermoformable (they may or may not be the same material); each laminating step consists of a step of thermoforming of the material on the supporting core 7.

In general, the inner laminating step and the outer laminating step may be carried out in any way known to a technician of the sector. By way of example, they may be carried out without or with the aid of a plug for the initial deformation, using only the vacuum or using both the vacuum on one side and an overpressure on the other side, and so on.

When the supporting core 7 which is picked up or made during the preliminary step has at least one first through hole 10, during the inner laminating step and during the outer laminating step the first sheet 14 and the second sheet 15, respectively, are also laminated at the first through hole 10, also laminating them on each other at the first through hole 10. Advantageously, in these cases the two laminating steps are carried out in such a way that the first sheet 14 and the second sheet 15 extend substantially in the lying plane of the first through hole 10 (Figures 4, 9 and 13). To obtain that result it is appropriate that, at least the laminating step which is carried out first, is carried out while keeping the supporting core 7 in a support (for example a thermoforming mould) which is shaped and sized in such a way as to support the sheet 14, 15 which is laminated at that lying plane.

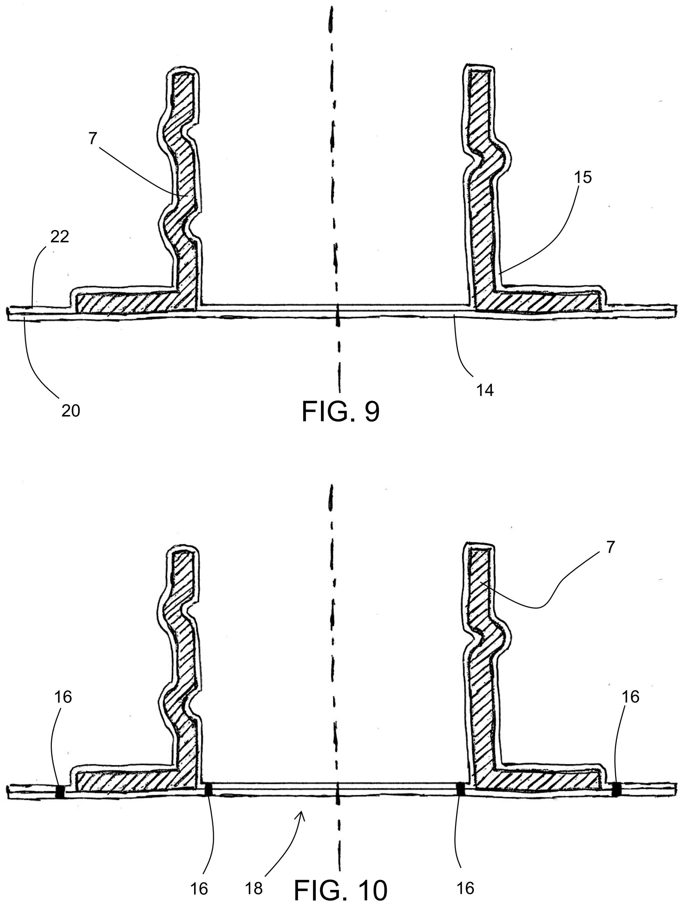

In the case of embodiments in which the tubular portion 11 is present, if the first through hole 10 is defined at the edge 12, 13 of the tubular portion 11 which is placed at the side of the supporting core 7 on which laminating is taking place, the support may have an insert configured to be inserted inside the tubular portion 11 until it reaches the edge 12, 13 of interest in order to prevent the plastic material from being inserted inside the tubular portion 11 from that side. For example, this situation could arise if using the supporting core 7 of Figure 7 to obtain the result of Figure 9 and carrying out the inner laminating step (on the first side 8) before the outer laminating step (on the second side 9).

The inner laminating step and the outer laminating step are carried out in such a way as to superpose the first sheet 14 and the second sheet 15 on each other at least along a superposing zone. In some embodiments, the inner laminating step and the outer laminating step may be carried out in such a way as to superpose the first sheet 14 and the second sheet 15 on each other along two or more separate superposing zones. Depending on the embodiments, the one or more superposing zones may be located in different positions relative to the supporting core 7. In some embodiments, a superposing zone is positioned externally relative to the supporting core 7, and may completely surround it. In some embodiments, in which the supporting core 7 has the first through hole 10, a superposing zone is positioned internally relative to the first through hole 10 and may extend along the entire outline of the first through hole, as well as completely covering the first through hole 10 (as in the embodiments illustrated). Depending on the embodiments, a superposing zone may be obtained in such a way as to be in turn superposed on a portion of the supporting core 7 and/or in such a way as to extend cantilever-style relative to the supporting core 7.

During the subsequent sealing step, the first sheet 14 and the second sheet 15 are sealed to each other and the supporting core 7 is completely enclosed between the first sheet 14 and the second sheet 15 (that is to say, the seal, illustrated by black dots 16 in the accompanying figures, extends along a line which in the first sheet 14 and in the second sheet 15 delimits two portions which completely enclose the supporting core 7 between them), so as to completely isolate the supporting core 7 relative to the outside environment and to guarantee its protection from the liquids and from ambient moisture (a guarantee which would not be possible if the first sheet 14 and the second sheet 15 were only fixed to each other by means of the lamination). The sealing step is advantageously carried out at the superposing zone between the first sheet 14 and the second sheet 15 which, once sealed to each other, constitute a liner 17 for the supporting core 7.

The first material and the second material are selected in such a way as to be able to be sealed to each other using at least any sealing method.

When the first sheet 14 and the second sheet 15 are two separate sheets, the seal extends along a closed line and on its own delimits in the first sheet 14 and in the second sheet 15 the two portions which completely enclose the supporting core 7 between them.

In contrast, when the first sheet 14 and the second sheet 15 are obtained from a single folded sheet, it is possible that the seal does not extend along a closed line and that in contrast in the first sheet 14 and in the second sheet 15 it only partly delimits the two portions which completely enclose the supporting core 7 between them; in this case the two portions will be partly delimited by the sealing line and partly by the one or more fold lines at which the single sheet is folded to create the first sheet 14 and the second sheet 15; in this case, a closed line will be obtained by considering the overall extent of the sealing line and of one or more fold lines. If the first sheet 14 and the second sheet 15 are constituted of a bag, it is also possible that the seal extends only in such a way as to completely close the opening of the bag.

When the supporting core 7 has the first through hole 10, during the sealing step the first sheet 14 and the second sheet 15 are also sealed to each other at the first through hole 10 delimiting in the first sheet 14 and in the second sheet 15 an inner zone 18 completely facing the first through hole 10; the seal between the first sheet 14 and the second sheet 15 therefore extends along a closed line which completely surrounds the inner zone 18.

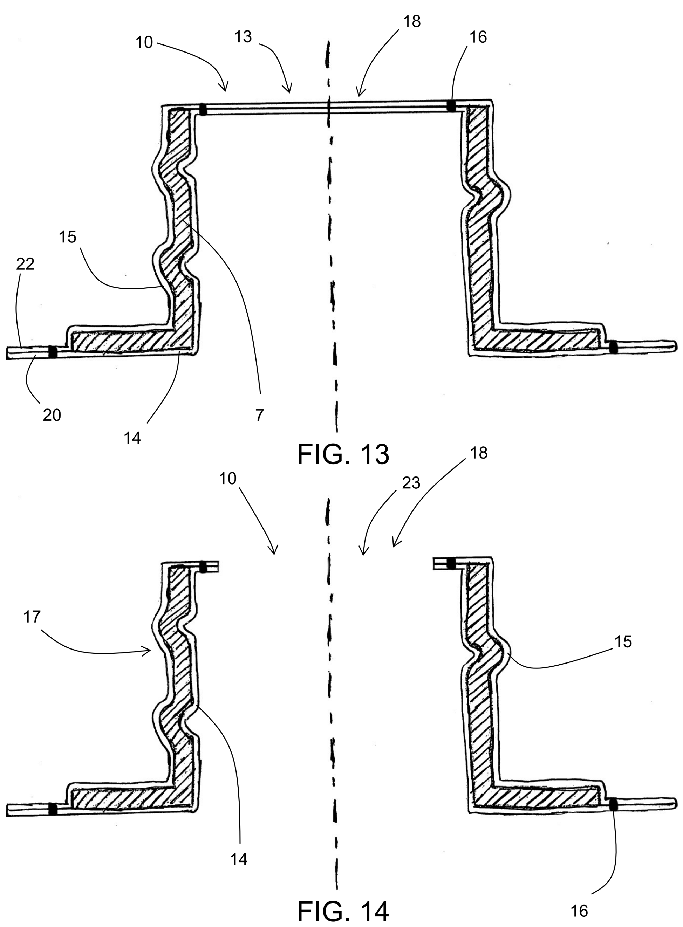

When the supporting core 7 comprises the tubular portion 11 which is configured to define the mouth 6 of the container 1 and which extends between the inner edge 12 and the outer edge 13, it may also be the case that, alternatively, either the first through hole 10 is delimited by the inner edge 12 of the tubular portion 11 and during the outer laminating step the second sheet 15 is also laminated at an inner surface of the tubular portion 11 (as far as the inner edge 12 - Figure 10), or the first through hole 10 is delimited by the outer edge 13 of the tubular portion 11 and during the inner laminating step it is the first sheet 14 which is also laminated at the inner surface of the tubular portion 11 (as far as the outer edge 13 - Figure 13).

During the subsequent joining step for joining the first part 2 to the second part 3, the first part 2 is fixed to the second part 3 by fixing one of either the first sheet 14 or the second sheet 15 to a surface layer 19 of the second part 3 which is constituted of a third plastic material. Advantageously, that surface layer 19 may be located either internally (Figure 16), or externally (Figure 15), relative to the container 1 to be obtained; in some embodiments, that surface layer 19 may constitute an entire inner surface or an entire outer surface of the second part 3.

In some embodiments of the method according to this invention, such as those illustrated in the accompanying figures, during the inner laminating step, the first sheet 14 is also used to create a first projecting perimetric band 20, which extends externally relative to an outer perimeter 21 of the supporting core 7. Similarly, during the outer laminating step, the second sheet 15 is also used to create a second projecting perimetric band 22, which extends externally relative to the outer perimeter 21 of the supporting core 7. Moreover, in these embodiments, the inner laminating step and the outer laminating step are carried out by laminating the first projecting perimetric band 20 and the second projecting perimetric band 22 on each other.

During the subsequent sealing step, the first projecting perimetric band 20 and the second projecting perimetric band 22 are sealed to each other in such a way as to create a first closed loop which completely surrounds the supporting core 7 (Figures 5, 10 and 13); as already indicated above the closed loop may be constituted of only the seal or of the fold lines which connect the first sheet 14 and the second sheet 15 to each other (which are present when the first sheet 14 and the second sheet 15 are obtained from a single sheet or from a bag). In general the closed loop seals the space between the first sheet 14 and the second sheet 15 relative to the outside.

When making of the first projecting perimetric band 20 and the second projecting perimetric band 22 is not required, superposing of the first sheet 14 and the second sheet 15 may be obtained by folding the one of the two which is laminated second on the other (for example by folding it around the outer perimeter 21 of the supporting core 7 - solution not illustrated).

Regarding the joining step, when the first projecting perimetric band 20 and the second projecting perimetric band 22 are present, the first part 2 may be fixed to the second part 3 at the first projecting perimetric band 20 (not illustrated) or at the second projecting perimetric band 22 (Figure 16). Alternatively, or when the first projecting perimetric band 20 and the second projecting perimetric band 22 are not present, during the joining step the first part 2 may be fixed to the second part 3 at a portion of the supporting core 7 facing the second part 3 (Figure 15), even at a zone where the first sheet 14 and the second sheet 15 are not superposed on each other.

Depending on the embodiments, the method may also comprise an outer cutting step during which the first sheet 14 and the second sheet 15 are cut, with material removal and externally relative to first closed loop at, respectively, the first projecting perimetric band 20 and the second projecting perimetric band 22 (not illustrated in the accompanying figures). It should be noticed that making a cut outside the first closed loop is generally only possible at stretches of the first closed loop which are delimited by a seal, not at stretches which are delimited by a fold of a single sheet or of a bag where, generally, material is not present outside the fold lines.

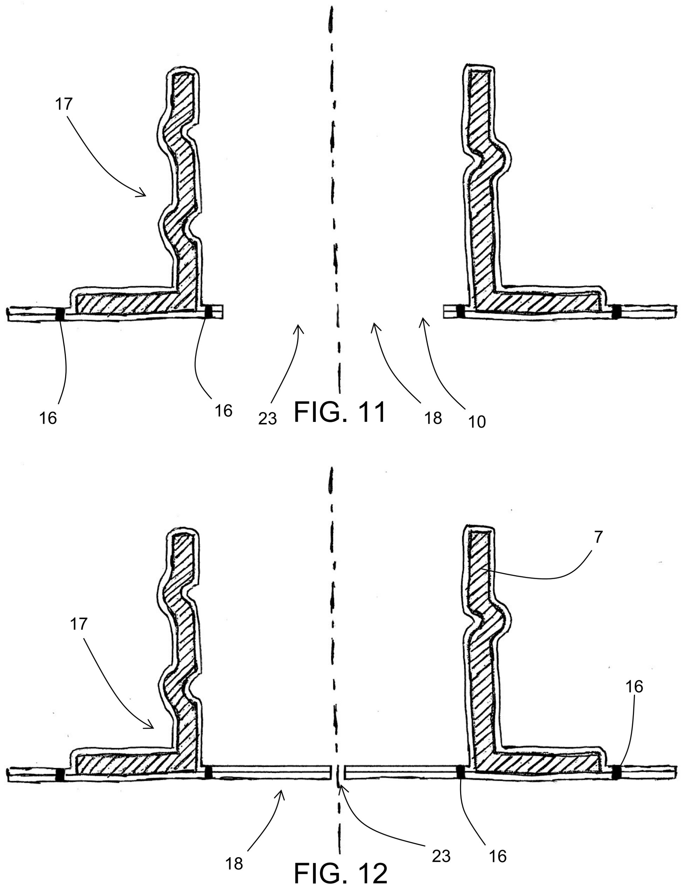

If the supporting core 7 has the first through hole 10, the method may also comprise an inner cutting step (Figures 6, 11, 12 and 14), carried out after the sealing step and creation of the inner zone 18, during which the first sheet 14 and the second sheet 15 are cut, with or without material removal at the inner zone 18 and a second through hole 23 is created which passes through both of them at the inner zone 18 (and which is facing the first through hole 10).

In some embodiments, the method may also comprise a completion step, during which a dispensing valve or nozzle are fixed at the inner zone 18 of the first part 2, which may be carried out simultaneously with or after the inner cutting step.

Moving on now to the container 1 which is the subject matter of this invention, it comprises at least the first part 2 and the second part 3, which are joined to each other and which between them delimit the inner space 4 of the container 1.

Without prejudice to what was already indicated relative to the method, it should be remembered that in some embodiments the container 1 to obtained may be in the shape of a vial or bottle and that, in those cases, the second part 3 defines the lateral wall of the container 1; it may also have a tubular shape and may have both ends open, or one end open and one end closed, for example squashed and sealed; each first part 2 present advantageously closes one end of the second part 3 and may advantageously constitute a dead end or a mouth 6 of the container 1.

In some embodiments, the container 1 comprises a plurality of first parts 2 fixed to separate zones of the second part 3.

In some embodiments, the second part 3 of the container 1 is a hollow element which has an access opening 5 and the first part 2 of the container 1 is mounted at the access opening 5 and is configured to constitute, in use, a mouth 6 of the container 1.

The first part 2 comprises a supporting core 7, three-dimensionally formed and comprising at least one cellulose material, and a liner 17 which completely envelops the supporting core 7. The supporting core 7 has a first side 8 directed inwards into the container 1 and a second side 9 directed outwards from the container 1. The liner 17 comprises a first sheet 14, which is constituted of a first plastic material and is laminated at the first side 8 of the supporting core 7, and a second sheet 15, which is constituted of a second plastic material and is laminated at the second side 9 of the supporting core 7. Both the first plastic material and the second plastic material are thermoformed on the supporting core 7. The first sheet 14 and the second sheet 15 are sealed to each other in such a way as to completely enclose the supporting core 7 isolating it from the surrounding environment (in particular relative to liquid substances and moisture). As explained with regard to the method, the first sheet 14 and the second sheet 15 may be two separate sheets, or be part of a single sheet or of a bag.

Advantageously, the supporting core 7 is constituted of a moulded cellulose pulp-based material.

The second part 3 comprises, internally or externally, at least one surface layer 19 which is constituted of a third plastic material, and the first part 2 is fixed to the second part 3 by the fixing of either the first sheet 14 or the second sheet 15 to the surface layer 19 of the second part 3.

In some embodiments, the first sheet 14 has a first projecting perimetric band 20 which extends externally relative to an outer perimeter 21 of the supporting core 7, and the second sheet 15 has a second projecting perimetric band 22 which extends externally relative to the outer perimeter 21 of the supporting core 7, is facing the first projecting perimetric band 20 and is connected to the first projecting perimetric band 20 along the first closed loop which completely surrounds the supporting core (7).

The first projecting perimetric band 20 and the second projecting perimetric band 22 may or may not have the same extent.

Advantageously, the first part 2 may be fixed to the second part 3 at the first projecting perimetric band 20 or at the second projecting perimetric band 22. Alternatively, or if the first projecting perimetric band 20 and the second projecting perimetric band 22 are not present, the first part 2 may be fixed to the second part 3 at a portion of the supporting core 7 facing the second part 3.

As already described, the supporting core 7 may have at least one first through hole 10; in this case the first sheet 14 may have a first inner band 24 which extends internally relative to an edge of the first through hole 10, and the second sheet 15 may have a second inner band 25 which extends internally relative to the edge of the first through hole 10. The second inner band 25 is facing the first inner band 24 and is sealed to the first projecting perimetric band 20 along a second closed loop which delimits the inner zone 18 facing the first through hole 10.

In some embodiments, the first sheet 14 and the second sheet 15 also have a second through hole 23 which passes through them both at the inner zone 18, and the second through hole 23 may have been obtained with or without material removal.

In some embodiments in which the second part 3 of the container 1 is a hollow element which has an access opening 5, and the first part 2 of the container 1 is mounted at the access opening 5, the container 1 may also comprise a dispensing valve or nozzle fixed at the inner zone 18 of the first part 2.

In some embodiments, the supporting core 7 comprises a tubular portion 11 which is configured to define a mouth 6 of the container 1 and which extends between its own inner edge 12 and its own outer edge 13. Moreover, alternatively, the first through hole 10 may be delimited by the inner edge 12 of the tubular portion 11 and the second sheet 15 may also be laminated at an inner surface of the tubular portion 11, or the first through hole 10 may be delimited by the outer edge 13 of the tubular portion 11 and the first sheet 14 may also be laminated at the inner surface of the tubular portion 11.

Finally, in some embodiments, the container 1 may also comprise a cap (not illustrated) associable with the mouth 6 of the container to close it; the cap may be screwable onto the mouth 6, if it is threaded, or it may be fastened to it with a snap-on action.

In some preferred embodiments, the cap has a structure similar to that of the first part 2, in particular a structure which comprises a second core, which comprises at least one cellulose material which defines the shape of the cap, and a second liner, which covers the second core at least at an inner side of the core intended to be directed towards the mouth 6 of the container 1 and fixed to it. Advantageously, the second liner comprises a sheet constituted of a plastic material which is laminated at the inner side of the second core and, preferably, at least partly on the outer side of it. There may also be a further sheet laminated at the outer side of the second core (preferably superposed on and fixed and/or sealed to the inner sheet).

This invention brings important advantages.

Firstly, thanks to this invention it was possible to define a method for making a container which allows the making of containers which are mainly cellulose material-based (all or almost all of their parts) with a much wider variety of shapes than is currently known on the market.

Secondly, it was possible to define a method for making a container which allows a further reduction in the use of plastic materials compared with the prior art.

Similarly, thanks to this invention it was possible to define a container which is mainly cellulose material-based (all or almost all of its parts) which can be made with a much wider variety of shapes than is currently known on the market.

Last but not least, it was possible to define a container which contains less plastic material than similar prior art containers (in particular in the case in which bottles or vials are made).

Finally, it should be noticed that this invention is relatively easy to make and that even the cost linked to making it is not very high.

The invention described above may be modified and adapted in several ways without thereby departing from the scope of the inventive concept which characterises it.

All details may be substituted with other technically equivalent elements and the materials used, as well as the shapes and dimensions of the various components, may vary according to requirements.

## Claims

1. A method for making a container comprising the following steps:
a first main step during which a first part (2) of the container (1) is made;
a second main step during which a second part (3) of the container (1) is picked up or is made; and
a joining step during which the first part (2) and the second part (3) are joined to each other to delimit between them an inner space (4) of the container (1);
wherein moreover the first main step in turn comprises the following steps:
a preliminary step during which a supporting core (7), three-dimensionally formed, is picked up or made, which comprises at least one cellulose material and which has a first side (8), intended to be directed inwards into the container (1), and a second side (9), intended to be directed outwards from the container (1);
an inner laminating step during which a first sheet (14) which is constituted of a first plastic material is laminated at the first side (8) of the supporting core (7), the inner laminating step consisting of a step of thermoforming of the first plastic material on the supporting core (7);
an outer laminating step during which a second sheet (15) which is constituted of a second plastic material is laminated at the second side (9) of the supporting core (7), the outer laminating step consisting of a step of thermoforming of the second plastic material on the supporting core (7); and
a sealing step during which the first sheet (14) and the second sheet (15) are sealed to each other and the supporting core (7) is completely enclosed between the first sheet (14) and the second sheet (15);
and wherein, during the joining step, the first part (2) is fixed to the second part (3) by fixing one of either the first sheet (14) or the second sheet (15) to a surface layer (19) of the second part (3) which is constituted of a third plastic material.

2. The method according to claim 1, wherein:
during the inner laminating step, the first sheet (14) is also used to create a first projecting perimetric band (20), which extends externally relative to an outer perimeter (21) of the supporting core (7);
during the outer laminating step, the second sheet (15) is also used to create a second projecting perimetric band (22), which extends externally relative to the outer perimeter (21) of the supporting core (7);
the inner laminating step and the outer laminating step are carried out by laminating the first projecting perimetric band (20) and the second projecting perimetric band (22) on each other; and
during the sealing step the first projecting perimetric band (20) and the second projecting perimetric band (22) are sealed to each other and a first closed loop is created which completely surrounds the supporting core (7).

3. The method according to claim 2, also comprising an outer cutting step during which the first sheet (14) and the second sheet (15) are cut, with material removal and externally relative to first closed loop at, respectively, the first projecting perimetric band (20) and the second projecting perimetric band (22).

4. The method according to claim 2 or 3, wherein during the joining step the first part (2) is fixed to the second part (3) at the first projecting perimetric band (20) or at the second projecting perimetric band (22).

5. The method according to any one of claims 1 to 3, wherein during the joining step the first part (2) is fixed to the second part (3) at a portion of the supporting core (7) facing the second part (3).

6. The method according to any one of claims 1 to 5, wherein:
the supporting core (7) which is picked up or made during the preliminary step has at least one first through hole (10);
during the inner laminating step and during the outer laminating step the first sheet (14) and the second sheet (15), respectively, are also laminated at the first through hole (10), laminating them on each other;
during the sealing step the first sheet (14) and the second sheet (15) are also sealed to each other at the first through hole (10) delimiting an inner zone (18) completely facing the first through hole (10).

7. The method according to claim 6, also comprising an inner cutting step during which the first sheet (14) and the second sheet (15) are cut, with or without material removal, at the inner zone (18) and a second through hole (23) is created which passes through both of them at the inner zone (18).

8. The method according to claim 7, also comprising a completion step, during which a dispensing valve or nozzle are fixed at the inner zone (18) of the first part (2).

9. The method according to claim 6 or 7, wherein the supporting core (7) which is picked up or made during the preliminary step comprises a tubular portion (11) configured to define a mouth (6) of the container (1) and which extends between an inner edge (12) and an outer edge (13) and wherein, alternatively:
the first through hole (10) is delimited by the inner edge (12) of the tubular portion (11) and during the outer laminating step the second sheet (15) is also laminated at an inner surface of the tubular portion (11); or
the first through hole (10) is delimited by the outer edge (13) of the tubular portion (11) and during the inner laminating step the first sheet (14) is also laminated at the inner surface of the tubular portion (11).

10. The method according to any one of claims 1 to 9, wherein during the first main step the supporting core (7) is made by moulding a cellulose pulp-based material.

11. The method according to any one of claims 1 to 10, wherein during the first main step a plurality of first parts (2) is made and wherein, during the joining step, all of the first parts (2) are joined to the second part (3), each at a different zone of the second part (3), to delimit the inner space (4) of the container (1).

12. The method according to any one of claims 1 to 11, wherein the second part (3) which is picked up or made during the second main step is a hollow element which has an access opening (5), wherein the first part (2) which is made during the first main step is configured to constitute, in use, a mouth (6) of the container (1) and wherein during the joining step the first part (2) is fixed to the second part (3) at the access opening (5).

13. The method according to any one of claims 1 to 12, wherein the first sheet (14) and the second sheet (15) which are used are, alternatively, separate sheets, part of a single sheet or part of a bag.

14. A container comprising at least one first part (2) and one second part (3) joined to each other which between them delimit an inner space (4) of the container (1), wherein:
the first part (2) comprises a supporting core (7), three-dimensionally formed and comprising at least one cellulose material, and a liner (17) which completely envelops the supporting core (7);
the supporting core (7) has a first side (8) directed inwards into the container (1) and a second side (9) directed outwards from the container (1);
the liner (17) comprises a first sheet (14) which is constituted of a first plastic material and is laminated at the first side (8) of the supporting core (7) and a second sheet (15) which is constituted of a second plastic material and is laminated at the second side (9) of the supporting core (7), both the first plastic material and the second plastic material being thermoformed on the supporting core (7);
the first sheet (14) and the second sheet (15) are sealed to each other;
the second part (3) comprises, internally or externally, at least one surface layer (19) which is constituted of a third plastic material; and
the first part (2) is fixed to the second part (3) by a fixing of either the first sheet (14) or the second sheet (15) to the surface layer (19) of the second part (3).

15. The container according to claim 14, wherein the first sheet (14) has a first projecting perimetric band (20) which extends externally relative to an outer perimeter (21) of the supporting core (7), and the second sheet (15) has a second projecting perimetric band (22) which extends externally relative to the outer perimeter (21) of the supporting core (7), is facing the first projecting perimetric band (20), is sealed to the first projecting perimetric band (20) and is part of a first closed loop which completely surrounds the supporting core (7).

16. The container according to claim 15, wherein the first part (2) is fixed to the second part (3) at the first projecting perimetric band (20) or at the second projecting perimetric band (22).

17. The container according to claim 14 or 15, wherein the first part (2) is fixed to the second part (3) at a portion of the supporting core (7) facing the second part (3).

18. The container according to any one of claims 14 to 17, wherein the supporting core (7) has at least one first through hole (10) and wherein the first sheet (14) has a first inner band (24) which extends internally relative to an edge of the first through hole (10), and the second sheet (15) has a second inner band (25) which extends internally relative to the edge of the first through hole (10), is facing the first inner band (24) and is sealed to the first projecting perimetric band (20) along a second closed loop which delimits an inner zone (18) facing the first through hole (10).

19. The container according to claim 18 wherein the first sheet (14) and the second sheet (15) also have a second through hole (23) which passes through them both at the inner zone (18), the second through hole (23) having been obtained with or without material removal.

20. The container according to claim 18 or 19, wherein the supporting core (7) comprises a tubular portion (11) which is configured to define a mouth (6) of the container (1) and which extends between an inner edge (12) and an outer edge (13) and wherein, alternatively:
the first through hole (10) is delimited by the inner edge (12) of the tubular portion (11) and the second sheet (15) is also laminated at an inner surface of the tubular portion (11); or
the first through hole (10) is delimited by the outer edge (13) of the tubular portion (11) and the first sheet (14) is also laminated at the inner surface of the tubular portion (11).

21. The container according to any one of claims 14 to 20, wherein the supporting core (7) is constituted of a moulded cellulose pulp-based material.

22. The container according to any one of claims 14 to 21, comprising a plurality of first parts (2) fixed to separate zones of the second part (3).

23. The container according to any one of claims 14 to 22, wherein the second part (3) of the container (1) is a hollow element which has an access opening (5) and wherein the first part (2) of the container (1) is mounted at the access opening (5) and is configured to constitute, in use, a mouth (6) of the container (1).

24. The container according to claim 19 and any one of claims 14 to 22, wherein the second part (3) of the container (1) is a hollow element which has an access opening (5), wherein the first part (2) of the container (1) is mounted at the access opening (5) and wherein the container (1) also comprises a dispensing valve or nozzle fixed at the inner zone (18) of the first part (2).

25. The container according to any one of claims 14 to 24, wherein the first part (2) constitutes a bottom of the container (1).

26. The container according to any one of claims 14 to 25 also comprising a cap which comprises a second core, which comprises at least one cellulose material which defines a shape of the cap, and a second liner, which covers the second core at least at an inner side of the second core configured to be directed towards a mouth (6) of the container (1) and fixed to it, the second liner comprising at least one sheet constituted of a plastic material which is laminated at the inner side of the second core.
